# FASCICULE DE BREVET EUROPEEN

(11) **EP 3 973 236 B1**
(45) Date de publication et mention de la délivrance du brevet: **24.01.2024**
(21) Numéro de dépôt: 20740694.3
(22) Date de dépôt: 11.05.2020
(51) Int. Cl.: F28D 7/00, F28D 7/06, F28D 7/08, F28F 1/24, F02C 7/14, F02K 3/06, F28F 13/08

(54) **SYSTEME D'ECHANGE DE CHALEUR OPTIMISE DE TURBOMACHINE**
OPTIMIERTES WÄRMEAUSTAUSCHSYSTEM FÜR EINE TURBOMASCHINE
OPTIMIZED HEAT EXCHANGE SYSTEM FOR A TURBOMACHINE

(30) Priorité: 20.05.2019 FR 1905260
(43) Date de publication de la demande: 30.03.2022
(73) Titulaire: SAFRAN, 75015 Paris (FR)
(72) Inventeur: TOUBIANA, Ephraïm, 77550 MOISSY-CRAMAYEL (FR); MAALOUF, Samer, 77550 MOISSY-CRAMAYEL (FR); TANG, Etienne, Yung, 77550 MOISSY-CRAMAYEL (FR)
(74) Mandataire: Gevers & Orès
(86) Numéro de dépôt international: PCT/FR2020/050770
(87) Numéro de publication internationale: WO 2020/234524

(56) Documents cités:
- EP-A2- 1 916 399
- WO-A1-2008/025136
- CN-A- 109 210 961
- US-A- 4 254 618

## Description

### Domaine de l'invention

La présente invention concerne le domaine général de l'aéronautique. Elle vise en particulier un système d'échange de chaleur pour une turbomachine.

### Arrière-plan technique

Une turbomachine, notamment d'aéronef, comprend divers organes et/ou équipements devant être lubrifiés et/ou refroidis tels que des paliers à roulements et engrenages. La chaleur dégagée par ces composants qui peut être très importante suivant la puissance de l'organe et/ou de l'équipement, est transportée par un fluide et évacuée vers des sources froides disponibles dans l'aéronef.

Il est connu d'équiper la turbomachine d'un ou de plusieurs systèmes d'échanges de chaleur pour réaliser l'échange de chaleur entre le fluide lubrifiant (typiquement de l'huile) et la source froide (air, carburant, etc). Il existe même différents types de systèmes d'échange de chaleur qui sont par exemple les échangeurs de chaleur carburant/huile généralement connus sous l'acronyme anglais FCOC pour « Fuel Cooled Oil Cooler » et les échangeurs de chaleur air/huile connus sous l'acronyme anglais ACOC pour « Air-Cooled Oil Cooler ». Des exemples d'échangeurs de chaleur sont connus des documents CN-A-109210961, WO-A1-2008/025136, et US-A-4254618. Le document EP 1916399 A2 notamment divulgue un système d'échange de chaleur selon le préambule de la revendication 1.

Les échangeurs de chaleur FCOC ont une double fonction de réchauffement du carburant avant la combustion dans la chambre de combustion de la turbomachine et de refroidissement de l'huile réchauffée par les dissipations thermiques de la turbomachine. Cependant, les échangeurs de chaleur FCOC ne suffisent pas à absorber toutes les dissipations thermiques car la température du carburant est limitée en vue des contraintes de sécurité.

Le complément de refroidissement est obtenu par les échangeurs de chaleur ACOC, en particulier ceux du type surfacique et connus sous l'acronyme SACOC. Les échangeurs de chaleur surfacique sont généralement agencés dans la veine secondaire de la turbomachine et utilisent le flux d'air secondaire pour le refroidissement de l'huile circulant dans la turbomachine. Ces échangeurs de chaleur se présentent sous la forme d'une pièce surfacique métallique permettant le passage d'huile dans des canaux. Le flux d'air secondaire est guidé le long d'ailettes portées par cette pièce surfacique et qui ont pour rôle d'augmenter la surface de contact avec le flux d'air secondaire et d'extraire les calories. Toutefois, les échangeurs de chaleur SACOC ont pour inconvénient de créer des pertes de charge supplémentaires dans la veine secondaire concernée puisqu'ils perturbent l'écoulement d'air, ce qui impacte la performance de la turbomachine ainsi que la consommation de carburant spécifique.

Leur performance aérothermique (ratio entre la puissance thermique dissipée et la perte de charge induite du côté du flux d'air secondaire) est faible.

De plus, les besoins en refroidissement du fluide lubrifiant augmentent du fait de l'accroissement des vitesses de rotation et des puissances mises en jeu pour répondre aux tendances de spécification sur les turbomachines.

### Résumé de l'invention

L'objectif de la présente invention est de fournir un système d'échange de chaleur permettant d'optimiser le rendement des échanges de chaleur en contrôlant le débit du flux d'air traversant le système et tout en évitant les pertes de charge et en augmentant la robustesse.

Nous parvenons à cet objectif conformément à l'invention grâce à un système d'échange de chaleur de turbomachine, comprenant un échangeur de chaleur comportant une paroi de support s'étendant sensiblement suivant une direction longitudinale L et une pluralité d'ailettes s'étendant chacune suivant une direction radiale depuis une surface radialement externe de la paroi de support et destinées à être balayées par un flux d'air, l'échangeur de chaleur comprenant une première paroi profilée disposée en amont des ailettes et configurée de manière à guider et ralentir le flux d'air entrant dans l'échangeur de chaleur à travers les ailettes et une deuxième paroi profilée disposée en aval des ailettes et configurée de manière à accélérer le flux d'air sortant de l'échangeur de chaleur, chaque première et deuxième paroi profilée étant fixée à la paroi de support via des éléments de support s'étendant radialement depuis la surface radialement externe.

Ainsi, cette solution permet d'atteindre l'objectif susmentionné. En particulier, en modifiant les conditions d'écoulement dans l'échangeur de chaleur, il est assuré une dissipation thermique avec une performance aérothermique optimale, ce qui contribue à la réduction des pertes de charge. En effet, dans le cas où ce système d'échange de chaleur est installé dans une turbomachine et notamment dans une veine secondaire, l'écoulement du flux d'air secondaire est très turbulent ce qui correspond à un nombre de Reynolds d'écoulement élevé dégradant les performances aérothermiques de l'échangeur de chaleur. L'écoulement atteint des Mach qui sont de l'ordre de 0.6 au décollage et en croisière. Le fait de ralentir la vitesse d'écoulement du flux d'air traversant l'échangeur en ajoutant les parois profilées à l'entrée et à la sortie permet d'optimiser ses performances aérothermiques et ainsi de minimiser la perte de charge pour une dissipation thermique donnée. Par ailleurs, les première et deuxième parois profilées permettent de mieux contrôler et améliorer l'aérodynamisme de la partie du flux d'air qui contourne l'échangeur des ailettes, c'est-à-dire qui ne traverse par les ailettes. En outre, ces première et deuxième parois profilées sont fixées à l'échangeur de chaleur grâce aux éléments de support qui apportent une meilleure tenue mécanique de l'ensemble et peuvent servir à redresser l'écoulement du flux d'air présentant une giration donnée.

Le système d'échange de chaleur comprend également l'une ou plusieurs des caractéristiques suivantes, prises seules ou en combinaison :
- la première paroi profilée comprend une première portion de paroi formant avec la paroi de support une entrée d'air présentant une première hauteur radiale et la deuxième paroi profilée comprend une première portion de paroi formant avec la paroi de support une sortie d'air présentant une deuxième hauteur radiale, le rapport entre la première hauteur et la deuxième hauteur compris entre 0.5 et 1.
- l'échangeur de chaleur comprend un panneau profilé recouvrant les ailettes, le panneau profilé s'étendant suivant la direction longitudinale entre la première paroi et la deuxième paroi auxquelles celui-ci est fixé.
- le panneau profilé est sensiblement plan ou incurvé.
- le panneau profilé s'étend à une distance maximale radiale de la surface radialement externe qui est supérieure à la première hauteur et à la deuxième hauteur respectivement des première et deuxième parois profilées.
- le système d'échange comprend un circuit de circulation fluidique dans lequel circule un fluide destiné à refroidir et/ou lubrifier des organes et/ou équipement de la turbomachine, le circuit de circulation fluidique comprenant un premier conduit agencé dans la paroi de support et un deuxième conduit agencé dans le panneau profilé.
- le circuit de circulation fluidique comprend deux canaux reliant les premiers et deuxième conduits entre eux.
- l'échangeur de chaleur comprend un capot agencé radialement à l'extérieur du panneau profilé.
- le capot présente une surface périphérique externe ayant une continuité de surface avec des surfaces radialement externes des première et deuxième parois profilées.
- le capot comprend une première portion définie dans un plan incliné formant un angle prédéterminé avec un plan dans lequel est définie la surface radialement externe de la paroi de support.
- le capot profilé présente une deuxième portion de paroi qui est curviligne et disposée en amont de la première portion.
- la deuxième portion de paroi curviligne présente un rayon de courbure.
- le rayon de courbure est fonction de la longueur du panneau profilé suivant la direction longitudinale perpendiculaire à la direction radiale, le rapport entre la longueur du panneau profilé et le rayon de courbure étant compris entre 0,5 et 1,5 mm.
- les ailettes sont continues et rectilignes chacune suivant la direction longitudinale ou sont discontinues et disposées en quinconces ou sont ondulées.
- au moins une ailette présente des hauteurs différentes suivant la direction radiale et qui varient de manière à épouser le profil du capot.
- les ailettes comprennent un premier type d'ailettes et un deuxième type d'ailettes agencés sur la surface radialement externe suivant une direction transversale perpendiculaire à la direction radiale, les ailettes du premier type d'ailettes s'étendant radialement chacune entre la paroi de support et le capot, et étant fixées chacune au capot de manière à supporter le capot sur toutes leurs hauteurs radiales.
- les ailettes sont agencées transversalement de manière qu'une ailette sur trois est une ailette du premier type.
- les ailettes du premier type présentent une portion centrale avec une hauteur radiale inférieure ou égale à la hauteur du capot.
- l'échangeur de chaleur est réalisé par fabrication additive.
- le panneau et les première et deuxième parois profilées sont réalisés en une seule pièce.
- le capot et le panneau sont réalisés en une seule pièce.
- les ailettes sont fixées au panneau.
- les ailettes sont réalisées en une seule pièce avec le panneau.
- le système d'échange de chaleur est destiné à être agencé dans une veine secondaire de la turbomachine.
- l'échangeur de chaleur est du type air/fluide et de préférence surfacique.
- le fluide est une huile de lubrification.
- les éléments de support sont disposés et répartis régulièrement suivant une direction transversale perpendiculaire à la direction longitudinale.

L'invention concerne également un module de turbomachine d'axe longitudinal X comprenant un carter annulaire autour de l'axe longitudinal dans lequel circule un flux d'air et un système d'échange de chaleur présentant l'une quelconque des caractéristiques précédentes qui est agencé dans le carter annulaire, le carter annulaire comportant une paroi annulaire qui guide au moins en partie le flux d'air et qui présente une ouverture un renfoncement dans lequel est installé l'échangeur de chaleur avec le panneau profilé, la première paroi étant reliée en amont du panneau profilé à une portion de la paroi annulaire et la deuxième paroi étant reliée en aval du panneau profilé à une portion de la paroi annulaire.

L'échangeur de chaleur est enterré dans la paroi du carter annulaire.

L'invention concerne en outre une turbomachine comprenant au moins un système d'échange de chaleur présentant l'une quelconque des caractéristiques précédentes et/ou un module de turbomachine tel que susmentionné.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale d'un exemple de turbomachine à laquelle s'applique l'invention;
[Fig. 2] La figure 2 est une vue en perspective et partielle d'un système d'échange de chaleur destiné à équiper une turbomachine selon l'invention ;
[Fig. 3] La figure 3 est une vue schématique et en coupe axiale d'un exemple de système d'échange de chaleur selon l'invention ;
[Fig. 4] La figure 4 est une vue en perspective d'un mode de réalisation d'un système d'échange de chaleur selon l'invention ;
[Fig. 5] La figure 5 illustre schématiquement et en coupe axiale une variante du système d'échange de chaleur représenté sur la figure 4 ;
[Fig. 6] La figure 6 est une vue en perspective d'une autre variante du mode de réalisation du système d'échange de chaleur selon la figure 4 ;
[Fig. 7] La figure 7 représente un exemple de système d'échange de chaleur avec un conduit fluidique agencé dans une des parois recouvrant les ailettes selon l'invention ;
[Fig. 8] La figure 8 illustre suivant une vue en perspective et en écorché un exemple d'agencement d'ailettes d'un échangeur de chaleur d'un système d'échange de chaleur coopérant avec un circuit de circulation fluidique selon l'invention ;
[Fig. 9] La figure 9 représente en perspective un autre mode de réalisation d'un système d'échange de chaleur avec un capot selon l'invention;
[Fig. 10] La figure 10 est une vue en coupe axiale du mode de réalisation selon la figure 9 ;
[Fig. 11] La figure 11 est une vue schématique et de côté d'un autre mode de réalisation d'un système d'échangeur de chaleur avec un échangeur de chaleur dont les ailettes présentent des hauteurs différentes ;
[Fig. 12] La figure 12 représente en perspective et partiellement un autre mode de réalisation d'un échangeur de chaleur d'un système d'échange, l'échangeur de chaleur comprenant un capot recouvrant des ailettes selon l'invention ;
[Fig. 13] La figure 13 est une vue en perspective de l'échangeur de chaleur de la figure 12 sans son capot selon l'invention ;
[Fig. 14] la figure 14 est une vue schématique et en coupe axiale d'un autre mode de réalisation dans lequel un échangeur de chaleur est enterré dans une paroi de la turbomachine selon l'invention ;
[Fig. 15] La figure 15 est encore une vue schématique et en coupe axiale d'un autre mode de réalisation d'un échangeur de chaleur enterré dans une paroi de la turbomachine selon l'invention ;
[Fig. 16] La figure 16 est une vue schématique et en coupe axiale d'un autre mode de réalisation d'un échangeur de chaleur enterré dans une paroi de la turbomachine selon l'invention ; et
[Fig. 17] La figure 17 est une vue schématique et en coupe axiale d'un autre mode de réalisation d'un échangeur de chaleur enterré dans une paroi de la turbomachine selon l'invention.

### Description détaillée de l'invention

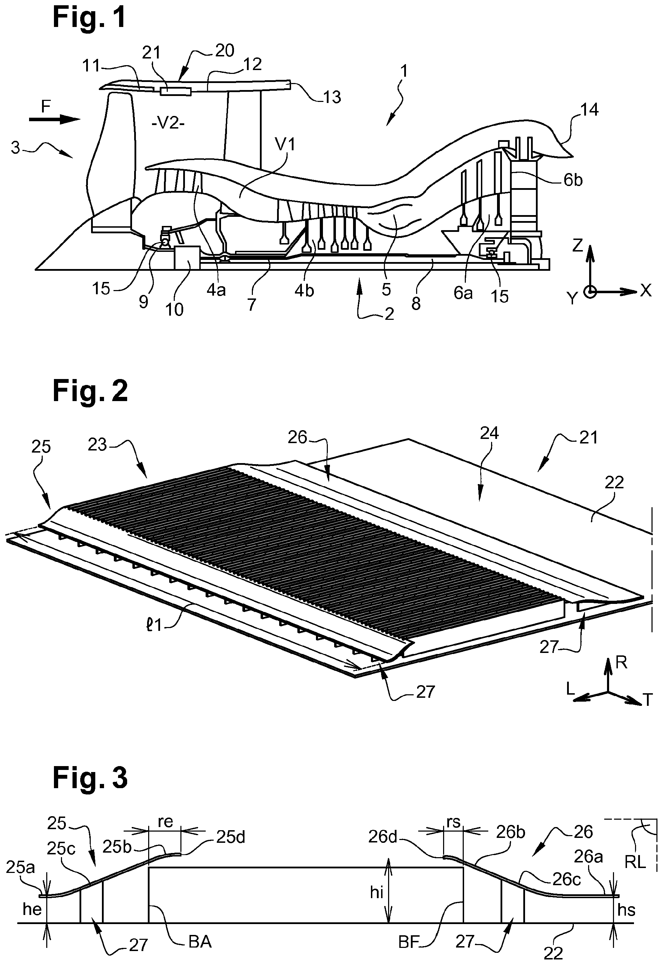

La figure 1 montre une vue en coupe axiale d'une turbomachine d'axe longitudinal X à laquelle s'applique l'invention. La turbomachine représentée est une turbomachine 1 double flux destinée à être montée sur un aéronef. Bien entendu, l'invention n'est pas limitée à ce type de turbomachine.

Cette turbomachine 1 double flux comprend de manière générale un générateur de gaz 2 en amont duquel est montée une soufflante ou module de soufflante 3.

Dans la présente invention, les termes « amont » et « aval » sont définis par rapport à la circulation des gaz dans la turbomachine et ici suivant l'axe longitudinal X.

Le générateur de gaz 2 comprend un ensemble de compresseur de gaz (comportant ici un compresseur basse pression 4a et un compresseur haute pression 4b), une chambre de combustion 5 et un ensemble de turbine (comportant ici une turbine haute pression 6a et une turbine basse pression 6b). Classiquement la turbomachine comprend un arbre basse pression 7 qui relie le compresseur basse pression et la turbine basse pression pour former un corps basse pression et un arbre haute pression 8 qui relie le compresseur haute pression et la turbine haute pression pour former un corps haute pression. L'arbre basse pression 7, centré sur l'axe longitudinal, entraîne ici un arbre de soufflante 9 grâce à un réducteur de vitesse 10. Des paliers de guidage 15 en rotation permettent également de guider en rotation l'arbre basse pression 7 par rapport à une structure fixe de la turbomachine.

La soufflante 3 est carénée par un carter de soufflante 11 portée par une nacelle 12 et génère un flux d'air primaire qui circule à travers le générateur de gaz 2 dans une veine primaire V1 et un flux d'air secondaire qui circule dans une veine secondaire V2 autour du générateur de gaz 2. Le flux d'air secondaire est éjecté par une tuyère secondaire 13 terminant la nacelle alors que le flux d'air primaire est éjecté à l'extérieur de la turbomachine via une tuyère d'éjection 14 située en aval du générateur de gaz 2. Dans la suite de la description le carter de soufflante et la nacelle sont considérés comme une seule et même pièce.

Les paliers de guidage 15 et le réducteur de vitesse 10 dans cet exemple de configuration de la turbomachine doivent être lubrifiés et/ ou refroidis pour assurer la performance de la turbomachine. La puissance générée par ceux-ci est dissipée dans un fluide provenant d'une source d'alimentation en fluide installée dans la turbomachine et qui permet de lubrifier et/ou de refroidir divers organes et/ou équipements de la turbomachine. Bien entendu d'autres équipements de la turbomachine génèrent beaucoup de chaleur devant être extraite de leur environnement.

A cet effet, la turbomachine comprend un système d'échange de chaleur 20 qui permet de refroidir le fluide destiné à lubrifier et/ou refroidir ces organes et/ou équipements. Dans le présent exemple, le fluide est une huile et la source froide destinée à refroidir l'huile est le flux d'air circulant dans la turbomachine, notamment le flux d'air secondaire.

Le système d'échange de chaleur comprend un échangeur de chaleur 21 qui est agencé dans le carter de soufflante de la turbomachine comme cela est représenté schématiquement sur la figure 1. L'échangeur de chaleur est du type surfacique air/huile.

En référence à la figure 2, l'échangeur de chaleur 21 comporte une paroi de support 22 qui s'étend suivant une direction longitudinale L. La paroi de support s'étend est ici sensiblement plane. Cette paroi peut ne pas être tout à fait plane mais incurvée pour suivre le profil de la paroi du carter de soufflante qui est destinée à porter l'échangeur de chaleur et qui est sensiblement cylindrique (d'axe longitudinal X). L'échangeur de chaleur peut occuper toute la paroi du carter de soufflante ou être agencé sur une portion de celle-ci.

L'échangeur de chaleur 21 comprend également une pluralité d'ailettes 23 qui s'élèvent chacune ici depuis une surface radialement externe 24 de la paroi de support 22 suivant une direction radiale R. Nous utilisons le terme « direction » pour décrire l'échangeur de chaleur en particulier. Ces ailettes sont destinées à être balayées par le flux d'air secondaire qui entre dans le carter de soufflante 11.

Comme nous pouvons le voir sur la figure 2, les ailettes 23 sont rectilignes et s'étendent chacune suivant la direction longitudinale L (parallèle à la circulation ou écoulement du flux d'air dans la turbomachine et notamment dans l'échangeur de chaleur). La direction longitudinale est parallèle à l'axe longitudinal en situation d'installation. Plus précisément encore, chaque ailette est plane. Les ailettes sont agencées successivement et régulièrement sur la surface radialement externe suivant une direction transversale T qui est perpendiculaire à la direction longitudinale L. Elles sont encore sensiblement parallèles entre elles. Chaque ailette présente un bord d'attaque BA et un bord de fuite BF opposés suivant le sens de circulation du flux d'air (cf. figure 3). Alternativement, les ailettes peuvent être discontinues et placées en quinconce et/ou ondulées suivant la direction radiale ou longitudinale.

Sur les figures 2 et 3, l'échangeur de chaleur 21 comprend une première paroi 25 profilée disposée en amont des ailettes (suivant le sens de circulation du flux d'air le long de la surface radialement externe) et qui est configurée de manière orienter et guider le flux qui entre dans l'échangeur de chaleur. Cette première paroi 25 est également configurée pour ralentir le flux d'air entrant dans l'échangeur de chaleur. Elle a un profil divergent. La première paroi 25 s'étend sur une distance l1 au moins égale à la distance sur laquelle sont disposées les ailettes. En particulier, la largeur l1 de la première paroi 25 profilée est supérieure à la largeur sur laquelle sont disposées les ailettes (suivant la direction transversale T).

L'échangeur de chaleur 21 est également pourvu d'une deuxième paroi profilée 26 disposée en aval des ailettes de manière à réduire les phénomènes de recirculation qui interviennent en aval des ailettes. La deuxième paroi profilée est également configurée pour accélérer le flux en sortie de l'échangeur de chaleur.

Sur la figure 3 en particulier, chaque première et deuxième paroi profilée 25, 26 présente une forme sensiblement ondulée ou incurvée dans un plan RL (formé par les directions longitudinale L et radiale R perpendiculaires) perpendiculaire au plan LT de la paroi de support 22. Plus précisément, la première paroi 25 comprend une première portion de paroi 25a, en amont, formant avec la paroi de support 22 une entrée d'air qui présente une première hauteur he prédéterminée suivant la direction radiale. La première hauteur he est inférieure à la hauteur hi radiale des ailettes. La première paroi 25 comprend une deuxième portion de paroi 25b (en aval de la première portion de paroi 25a), qui recouvre au moins une partie des ailettes (suivant la direction longitudinale L). La portion de paroi 25b s'étend sur une distance de recouvrement re de sorte à mieux contrôler et améliorer l'aérodynamisme du flux d'air qui passe radialement au-dessus (à l'extérieur) des ailettes 23 suivant la figure 3. Cette deuxième portion de paroi 25 couvre les bords d'attaque BA de toutes les ailettes 23 alignées suivant la direction transversale T.

La deuxième paroi 26 présente sensiblement la même configuration que celle de la première paroi 25. Elle a cependant un profil convergent. Sa largeur l1 est identique à celle de la première paroi 25. La deuxième paroi 26 comprend également une portion de paroi 26a, en aval, formant avec la paroi de support 22 une sortie d'air qui présente une deuxième hauteur hs prédéterminée suivant la direction radiale. La deuxième hauteur hs est inférieure à la hauteur hi des ailettes.

Dans le présent exemple de réalisation, le rapport entre la première hauteur he et la deuxième hauteur hs est compris entre 0.5 et 1.

De même, la deuxième paroi 26 comprend une deuxième portion de paroi 26b qui recouvre au moins une partie des ailettes 23 (suivant la direction longitudinale L). La deuxième portion de paroi 26b s'étend sur une distance de recouvrement rs dans le même but de contrôler et d'améliorer l'aérodynamisme du flux d'air passant au-dessus de l'échangeur de chaleur. Cette deuxième portion de paroi 25 couvre les bords de fuite BF de toutes les ailettes 23 alignées suivant la direction transversale T.

En référence à la figure 3, l'échangeur de chaleur 21 comprend une pluralité d'éléments de support 27 permettant de fixer les ailettes à la paroi de support 22. En d'autres termes, les éléments de support 27 s'étendent suivant la direction radiale depuis la surface radialement externe 24 de la paroi de support 22. Les éléments de support 27 sont répartis régulièrement le long respectivement des première et deuxième parois 25, 26. Celles-ci assurent une meilleure tenue mécanique des première et deuxièmes parois.

Suivant une variante de réalisation, les éléments de support 27 sont configurés pour redresser l'écoulement du flux d'air entrant dans l'échangeur de chaleur à travers la première paroi profilée. Chaque élément de support 27 est dans le présent exemple fixé à une portion de paroi centrale 25c, 26c respectivement de la première et deuxième parois. Les portions de paroi centrales 25c, 26c présentent chacune une inclinaison par rapport à la direction longitudinale. A cet effet, chaque élément de support 27 présente ici une forme trapézoïdale.

Les éléments de support 27 disposés à l'entrée de l'échangeur de chaleur sont potentiellement plus épaisses que les ailettes 23 pour une meilleure tenue mécanique de la première paroi 25 sur la paroi de support 22. En effet, les efforts appliqués sont potentiellement plus importants localement, en raison de la giration de l'écoulement du flux d'air en amont et son redressement par ces mêmes éléments de support. Par ailleurs, ces éléments de support 27 plus épais sont davantage espacés suivant la direction transversale pour réduire les pertes de charge associées, dans cette zone où les échanges thermiques ne sont pas optimaux (vitesse d'écoulement plus importante).

Alternativement, les éléments de support 27 et les ailettes 23 présentent la même épaisseur.

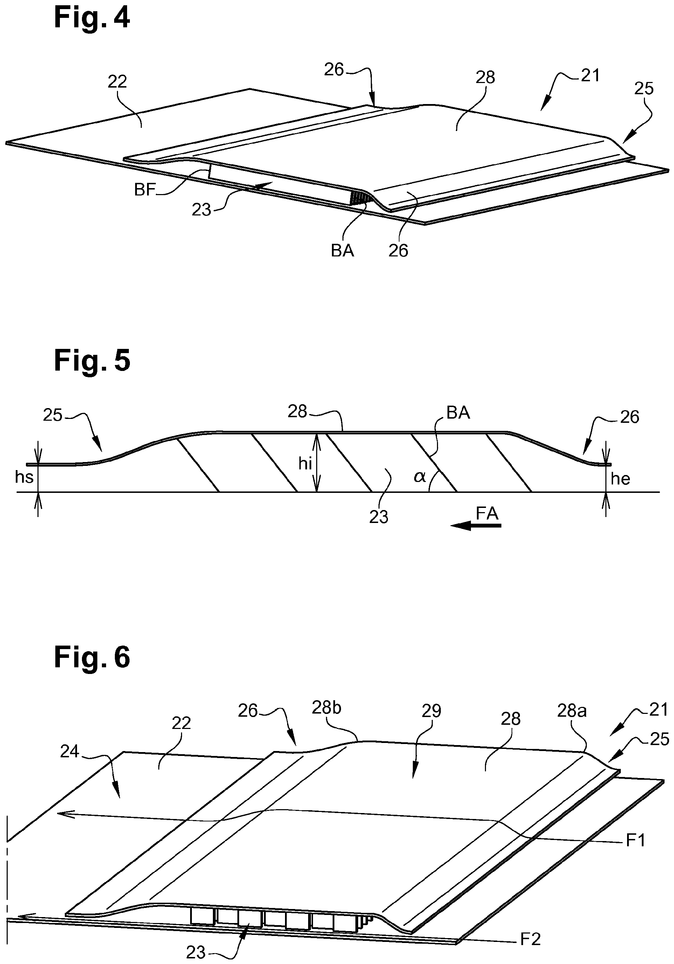

Les figures 4 et 5 représentent un autre mode de réalisation de l'invention. Les éléments identiques du mode de réalisation précédent sont représentés par les mêmes références numériques. Comme cela est illustré, l'échangeur de chaleur 21 comprend un panneau 28 profilé recouvrant les ailettes 23 de manière à contrôler l'écoulement du flux d'air à l'intérieur de l'échangeur de chaleur sans risque de dérivation (by-pass) du flux d'air qui traverse l'échangeur de chaleur. Les ailettes 23 sont ainsi agencées radialement entre la paroi de support 22 et le panneau 28 profilé. Le flux d'air qui entre dans la veine secondaire V2 est séparé en une partie de flux d'air F1 qui contourne l'échangeur de chaleur et une partie de flux d'air F2 qui traverse les ailettes.

Dans cet exemple de réalisation, le panneau 28 s'étend suivant la direction longitudinale L entre la première paroi 25 et la deuxième paroi 26 et présente également une largeur identique à celle des premier et deuxième parois 25, 26. Le panneau 28 est sensiblement circulaire ou incurvé (autour de l'axe longitudinal X en situation d'installation dans la turbomachine). En particulier, le panneau comprend un premier bord longitudinal 28a qui rejoint une première extrémité longitudinale 25d de la première paroi profilée et un deuxième bord longitudinal 28b qui rejoint une première extrémité 26d de la deuxième paroi 26 (figure 6). Comme cela est illustré sur la figure 5, la surface périphérique externe 29 du panneau 28 présente une continuité de surface avec les surfaces radialement externes 42, 43 des première et deuxième parois 25, 26.

Les parois 25, 26 et le panneau 28 sont avantageusement réalisées en une seule pièce et par exemple par un procédé de fabrication additive (ou impression 3D) telle qu'un procédé de fusion de laser sur lit de poudre.

Le panneau 28 s'étend à une distance radiale égale ou supérieure à celle des ailettes 23. En d'autres termes, cette distance radiale est supérieure à la première et deuxième hauteur he, hs des première et deuxième parois 25, 26. Avantageusement, mais non limitativement, les ailettes sont fixées, par exemple par brasure, au panneau 28 et/ou au à la paroi de support 22. Alternativement, les ailettes 23 et la paroi de support 22 sont formés d'une seule pièce (c'est-à-dire venus de matière et monoblocs) et avantageusement par fabrication additive De même, les ailettes et le panneau 28 peuvent être réalisés d'une seule pièce. La fabrication additive est réalisée dans un sens FA représenté sur la figure 5 allant de l'amont vers l'aval de l'échangeur de chaleur. Dans ce cas, pour faciliter la fabrication additive et notamment sans support, le bord d'attaque BA des ailettes 23 présente un angle alpha (a) avec la direction radiale.

Bien entendu, l'échangeur de chaleur peut dans son ensemble être fabriqué par une autre méthode de fabrication telle que le forgeage.

Par ailleurs, le fait de disposer le panneau 28 sur les ailettes permet d'améliorer la tenue mécanique de l'échangeur de chaleur et par là même de réduire les épaisseurs des ailettes 23. Or, une réduction d'épaisseur des ailettes 23 permet de réduire également la masse de l'échangeur de chaleur 21.

De même, dans le cas d'éléments de support 27 plus épais que les ailettes, et qui sont agencés avec des espaces plus importants entre eux suivant la direction transversale T, ceux-ci peuvent servir de support au panneau 28 en zone de sortie d'écoulement du flux d'air.

Suivant une alternative du mode de réalisation précédent et illustrée sur la figure 6, l'échangeur de chaleur 21 présente plusieurs ailettes 23 qui sont disposées en quinconce sur la surface radialement externe 24 de la paroi de support 23 et suivant le sens d'écoulement du flux d'air F. Il y a des rangées d'ailettes 23 dans le sens de la direction longitudinale et dans le sens de la direction transversale T. Comme dans le mode de réalisation précédent, les ailettes sont recouvertes par un panneau 28 profilé central qui est prolongé en amont par la première paroi 25 et en aval par la deuxième paroi 26. Les ailettes disposées de la sorte permettent d'intensifier par interruption et redéveloppement des couches limites thermiques ce qui permet de réduire significativement la surface d'échange pour une puissance dissipée donnée ou bien d'augmenter la puissance pouvant être dissipée dans un encombrement donné.

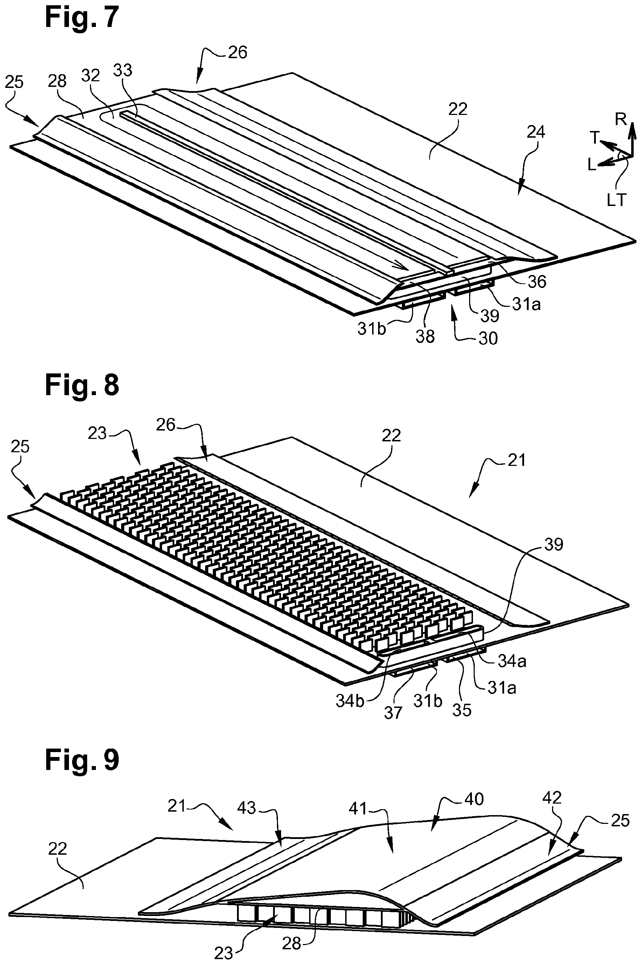

Suivant un autre mode de réalisation représenté sur les figures 7 à 9, le système d'échange de chaleur comprend un circuit de circulation fluidique dans lequel circule un fluide destiné à refroidir et/ou lubrifier des organes et/ou équipements de la turbomachine. Typiquement le circuit de circulation fluidique, utilisant de l'huile, est relié d'une part, à une source d'alimentation telle qu'un réservoir et d'autre part, à une ou plusieurs pompes prévues pour favoriser l'acheminement de l'huile vers les organes et/ou équipements.

Dans le présent exemple, le circuit de circulation fluidique comprend un premier conduit 30 qui est agencé dans la paroi de support 22 et du côté d'une surface radialement interne de celle-ci. Cette surface radialement interne est opposée radialement à la surface radialement externe 24. Le premier conduit 30 présente une entrée d'huile et une sortie d'huile (non représentée). Par ailleurs, le premier conduit 30 se présente sous la forme d'une première canalisation 31a et d'une deuxième canalisation 31b s'étendant chacune suivant la direction transversale et parallèlement l'une de l'autre. La première canalisation 31a comporte l'entrée d'huile tandis que la deuxième canalisation 31b comprend la sortie d'huile, l'entrée et la sortie étant placées l'une à côté de l'autre.

Le circuit de circulation fluidique comprend également un deuxième conduit 32 qui est agencé dans la paroi du panneau 28 profilé. En d'autres termes, de l'huile circule de part et d'autre des ailettes suivant la direction radiale ce qui permet d'augmenter les échanges convectifs et donc la puissance dissipée du fluide chaud (ici huile) vers la source froide (le flux d'air dans la veine secondaire). Le deuxième conduit 32 est avantageusement creusé ou formé dans la matière. Comme nous pouvons le voir sur la figure 7, le panneau comprend une double paroi que nous nommons première cloison et deuxième cloison et qui sont espacées l'une de l'autre radialement pour former alors le deuxième conduit 32. Ce dernier présente une section en forme de U (dans le plan LT) qui occupe sensiblement toute la surface du panneau 28. Un pan 33 s'étendant suivant la direction transversale s'élève radialement dans le conduit 32 pour former les deux branches du U. Le pan 33 présente une largeur inférieure à celle du panneau 28 lui-même (suivant la direction transversale T).

Sur la figure 8, le circuit de circulation fluidique comprend en outre deux canaux 34a, 34b qui relient le premier conduit 30 et le deuxième conduit 32 entre eux. Les canaux 34a, 34b sont agencés radialement entre la paroi du support 22 et le panneau 28. Un premier canal 34a débouche de part et d'autre (au niveau d'une extrémité 35) dans la première canalisation 31a et (au niveau d'un premier sommet 36 de la branche du U) dans le deuxième conduit. Quant au deuxième canal 31b celui-ci débouche également de part et d'autre (au niveau d'une extrémité 37) dans la deuxième canalisation 31b et (au niveau d'un deuxième sommet 38 de la branche du U) dans le deuxième conduit.

Les canaux 34a, 34b sont avantageusement formés dans une cloison 39 qui relie le panneau 28 à la paroi de support 22. De la sorte, l'huile «chaude » entre par l'entrée de la première canalisation 31a, vers le deuxième conduit 32 via le premier canal 34a, fait le tour du deuxième conduit, puis emprunte le deuxième canal 34b pour circuler dans la deuxième canalisation 31b et enfin sortir par la sortie d'huile en une huile « froide ». La performance de l'échangeur de chaleur est ainsi améliorée car la température des ailettes va augmenter et être plus uniforme sur leurs surfaces favorisant ainsi la propagation de la chaleur par conduction.

De manière alternative, chaque premier conduit 30 et deuxième conduit 32 peut être connecté de manière indépendante à la source d'alimentation. Dans ce cas, nous comprenons que chaque premier et deuxième conduit 30, 32 comprend respectivement une entrée et une sortie d'huile. L'échangeur de chaleur est dépourvu de canaux 34a, 34b.

Les ailettes 23 qui sont représentées dans ce mode de réalisation (figure 8) sont discontinues (à pas décalés) c'est-à-dire qu'il y a plusieurs ailettes sur une rangée d'ailettes sensiblement parallèles à la direction longitudinale. Avantageusement, les ailettes sont disposées en quinconce. Suivant une autre alternative, les ailettes 23 sont ondulées suivant la direction longitudinale ou suivant la direction radiale.

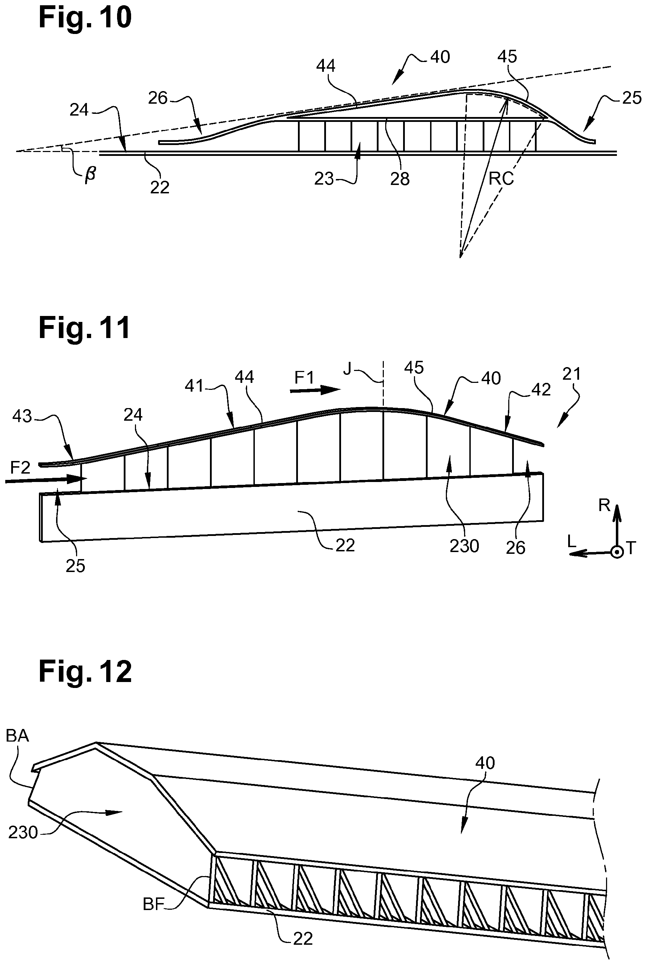

Suivant un autre mode de réalisation illustré sur les figures 9 et 10, l'échangeur de chaleur est équipé d'un capot 40 avec un profil aérodynamique qui est agencé radialement à l'extérieur du panneau 28. Les éléments identiques des modes de réalisation précédents sont représentés par les mêmes références numériques. En d'autres termes, le panneau 28 est situé suivant la direction radiale entre les ailettes 23 et le capot 40. Une telle configuration permet d'améliorer davantage l'aérodynamisme de l'échangeur de chaleur et de ne pas perturber le flux d'air par l'intégration de l'échangeur de chaleur. Comme nous pouvons le voir en particulier sur la figure 9, le capot 40 présente une surface périphérique externe 41 ayant une continuité de surface avec des surfaces radialement externe 42, 43 des première et deuxième parois profilées 25, 26.

En particulier, le capot 40 présente une première portion 44 et une deuxième portion 45 qui est agencée en amont de la première portion 44 suivant le sens de la circulation du flux d'air dans l'échangeur de chaleur. La première portion 44 est définie dans un plan ayant une inclinaison par rapport à la direction longitudinale L. Le plan incliné forme un angle prédéterminé beta (β) (cf. figure 10) avec un plan (parallèle au plan LT) dans lequel est définie la surface radialement externe 24 de la paroi de support 22. Quant à la deuxième portion 45, celle-ci présente une forme curviligne dans le plan RL. La portion curviligne est ici concave. Celle-ci représente environ un quart de cercle. Son rayon de courbure dépend de la longueur du panneau 28 (suivant la direction longitudinale L). Le rapport entre la longueur et le rayon de courbure est compris entre 0,5 et 1,5 mm. La largeur du capot 40 est sensiblement identique à celle du panneau profilé. Le capot avec son profil aérodynamique permet de mieux intégrer l'échangeur de chaleur dans le flux d'air, notamment secondaire sans le perturber, alors que le panneau 28 ici interne améliore les performances aérothermiques de l'écoulement du flux d'air à l'intérieur de l'échangeur de chaleur. Chaque capot 40 et panneau 28 est optimisé pour une partie du flux d'air.

Le panneau 28 et le capot 40 peuvent être réalisés en une seule pièce (d'un seul tenant) de manière à simplifier la fabrication et le montage de l'échangeur de chaleur. La fabrication additive est un procédé de fabrication permettant d'atteindre cet objectif. Il peut être prévu que les ailettes 23 soient fabriquées également en une seule pièce avec le panneau et le capot et suivant le même procédé de fabrication.

La figure 11 illustre encore un autre mode de réalisation d'un système d'échange de chaleur avec un échangeur de chaleur 21 comprenant des ailettes 230 qui ont des hauteurs différentes. En particulier, les ailettes s'étendent de la surface radialement externe 24 de la paroi de support 22 et sont recouvertes par un capot 40 ayant un profil aérodynamique pour améliorer l'aérodynamisme du flux d'air qui contourne l'échangeur de chaleur. Le capot 40 comprend en amont une première paroi 25 à profil divergent et une deuxième paroi 26 à profil convergent. Comme dans les cas précédents, le flux d'air F2 est ralenti en entrant dans le flux d'air et est accéléré en sortie de l'échangeur de chaleur 21. La surface périphérique externe 41 a une continuité de surface avec des surfaces radialement externes 42, 43 des première et deuxième parois 25, 26. Dans le présent exemple, les ailettes 230 épousent la forme du capot 40 qui les recouvre. En effet, le capot 40 comprend une première portion 44 inclinée et une deuxième portion 45 curviligne. De la sorte les ailettes 230 présentent respectivement une hauteur qui varie en croissant puis en décroissant de l'amont (de la première paroi 25) vers l'aval (de la deuxième paroi 26) suivant le sens de circulation du flux dans l'échangeur de chaleur. La hauteur des ailettes croit jusqu'à la jonction J longitudinale entre la première portion inclinée 44 et la deuxième portion curviligne 45. La hauteur décroit à partir de la jonction J. Il n'y a donc pas de panneau 28 radialement entre les ailettes et le capot.

Les ailettes qui sont représentées sur la figure 11 sont discontinues et déposées en quinconce mais celles-ci pourraient chacune s'étendre le long du profil du capot suivant la direction longitudinale et avoir la hauteur radiale qui varie pour épouser le capot. Les ailettes représentées se trouvant à l'endroit de la jonction J présentent une extrémité radialement externe courbe (concave) ou sensiblement en forme de V renversé. Les ailettes pourraient être également ondulées suivant la direction longitudinale et suivant la direction radiale.

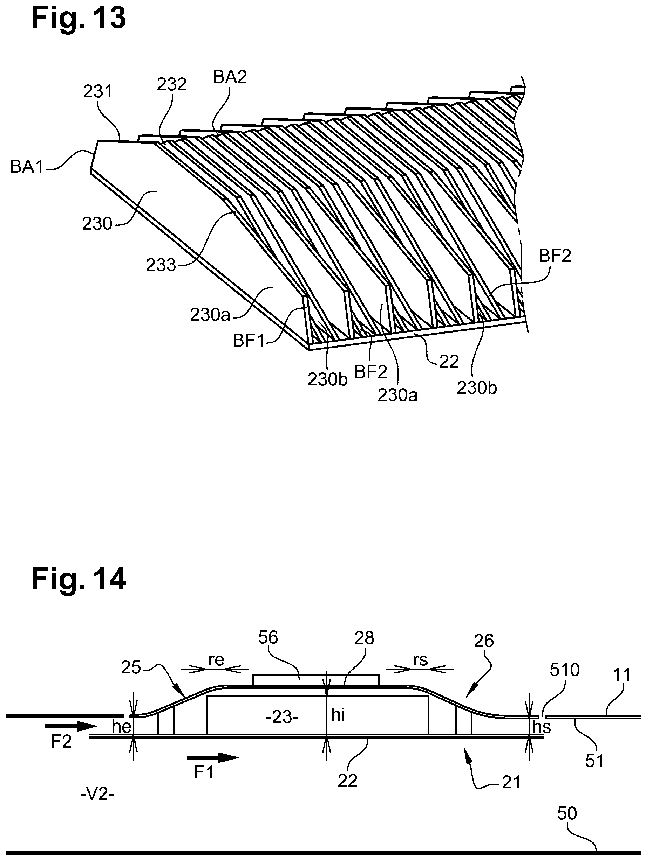

Suivant un autre mode de réalisation illustré de manière schématique sur les figures 12 et 13, l'échangeur de chaleur comprend des ailettes 230 qui s'étendent radialement de la paroi de support 22 et qui sont recouvertes par un capot 40. Le capot comprend une première portion de paroi en amont et une deuxième portion de paroi en aval. Les ailettes 230, comme pour le mode de réalisation de la figure 11, suivent le profil du capot 40 avec une hauteur croissante puis décroissante de l'amont vers l'aval. En référence à la figure 13 en particulier, les ailettes 230 sont continues et rectilignes suivant la direction longitudinales. Nous voyons également qu'il y a deux types de forme d'ailettes dans ce mode de réalisation soit un premier type d'ailettes supportant le capot et un deuxième type d'ailettes qui ne supportent pas le capot.

Le premier type d'ailette 230a comprend un bord d'attaque BA1 et un bord de fuite BF1 qui s'étendent jusqu'au capot. Les bords d'attaque et de fuite BA1, BF1 présentent une extrémité radialement interne solidaire de la paroi de support 22 et une extrémité radialement externe solidaire du capot. Ces bords d'attaque BA1 et BF1 sont reliés par une première surface 231, une deuxième surface 232 et une troisième surface 233. Ces surfaces sont opposées radialement à la surface radialement externe 24 de la paroi de support 22. La première surface 213 et la troisième surface 233 sont inclinées par rapport à un plan parallèle au plan LT et la deuxième surface s'étend dans un plan sensiblement parallèle au plan LT.

Le deuxième type d'ailette 230b comprend un bord d'attaque BA2 et un bord de fuite BF2 dont leurs hauteurs respectives mesurées entre l'extrémité radialement interne et l'extrémité radialement externe sont inférieurs à la hauteur des bords d'attaque et de fuite du premier type d'ailettes 230a. Le bord d'attaque et de fuite BA2, BF2 sont inclinés respectivement et croient depuis la paroi de support 22 vers une hauteur correspondant à celle de la deuxième surface 232 du premier type d'ailettes. Chaque ailette présente une portion centrale avec une deuxième surface 232 à la même hauteur radiale. Nous comprenons que toutes les ailettes (ou au moins les ailettes du premier type 230a) sont liées au capot au niveau de leur portion centrale.

Dans ce mode de réalisation, les ailettes sont agencées suivant la direction transversale de sorte à avoir un premier type d'ailettes sur trois ailettes. En d'autres termes, deux ailettes du deuxième type sont agencées de manière adjacente et entre deux ailettes du premier type. Bien entendu, l'agencement peut être différent, par exemple de sorte qu'une ailette sur cinq est une ailette du premier type.

Les premiers et deuxièmes types d'ailettes permettent un transfert thermique.

Les figures 14 à 17 représentent des modes de réalisation d'un échangeur de chaleur enterré dans une paroi annulaire ici d'une veine secondaire V2 de la turbomachine et guidant au moins en partie le flux d'air secondaire. L'échangeur de chaleur 21 dans son agencement est balayé et/ou traversé par le flux d'air secondaire de la turbomachine. La veine secondaire est délimitée par une paroi annulaire radialement interne 50 et une paroi annuaire radialement externe 51. Cette dernière est portée au moins en partie par le carter de soufflante 11.

Suivant un exemple de réalisation sur la figure 14, la paroi annulaire radialement externe 51 comprend une ouverture 510 dans laquelle est installé l'échangeur de chaleur. Dans ce cas, l'échangeur de chaleur 21 comprend les ailettes qui sont recouvertes d'une part, par le panneau 28 et d'autre part, par la paroi de support 22 (suivant l'axe radial de la turbomachine). L'échangeur de chaleur 21 comprend également la première paroi 25 profilée qui est reliée en amont à une portion de la paroi radialement externe 51 et aussi au panneau 28, et la deuxième paroi 26 qui est reliée en aval à une portion de la paroi radialement externe 51 et aussi au panneau 28. Le panneau 28 est décalé radialement vers l'extérieur de la paroi radialement externe 51. De la sorte, les ailettes 23 sont ainsi enterrées au moins en partie dans la paroi 51 de la veine secondaire ce qui permet de minimiser la perturbation de l'écoulement du flux d'air dans la veine secondaire. Avantageusement, la paroi radialement externe 51, la première paroi 25, le panneau 28 et la deuxième paroi 26 présentent une continuité de surface. La paroi de support 22 s'étend radialement à distance de la paroi radialement externe 51. La portion de paroi (de la veine secondaire avec la première paroi 25) forme avec la paroi de support 22 une entrée d'air ayant une première hauteur he prédéterminée suivant l'axe radial de la turbomachine qui permet de ralentir la vitesse d'écoulement du flux d'air en entrée de l'échangeur de chaleur. La portion de paroi (de la veine secondaire avec la deuxième paroi 26) forme avec la paroi de support 22 une sortie d'air hs ayant une deuxième hauteur hs prédéterminée suivant l'axe radial. Le rapport entre la première hauteur he et la deuxième hauteur hs est compris entre 0.5 et 1.

Suivant un autre exemple de réalisation sur la figure 13, la paroi radialement externe 51 comprend un décrochement ou renfoncement 53 intégrant l'échangeur de chaleur. Les ailettes 23 sont ainsi enterrées au moins en partie dans la paroi 51 de la veine secondaire ce qui permet de minimiser la perturbation de l'écoulement du flux d'air dans la veine secondaire. Les ailettes s'étendent depuis la paroi renfoncée 52 et sont recouvertes radialement d'une paroi 54 comme dans le mode de réalisation illustré sur les figures 4 à 6. La paroi renfoncée 53 forme en amont un congé 55a ou une première paroi courbe qui relie la paroi radialement externe 51 de la veine secondaire et en aval un congé 55b ou une deuxième paroi courbe qui relie la paroi radialement externe 51 de la veine secondaire. Nous considérons que le panneau 28 et les premier et deuxième parois 25, 26 des modes de réalisation précédents sont formés par la paroi enfoncée 53, les parois courbes 55a, 55b, et les portions de parois 51a, 51b de la veine secondaire (sensiblement cylindrique). La paroi de support 22 est formée par la plaque 54. La plaque 54 s'étend dans la veine secondaire. Celle-ci présente une forme circulaire ou incurvée (autour de l'axe longitudinal). La portion de paroi (de la veine secondaire) forme avec la paroi 54 une entrée d'air ayant une première hauteur he prédéterminée suivant l'axe radial de la turbomachine qui permet de ralentir la vitesse d'écoulement du flux d'air en entrée de l'échangeur de chaleur. La portion de paroi (de la veine secondaire) forme avec la paroi 54 une sortie d'air hs ayant une deuxième hauteur hs prédéterminée suivant l'axe radial. Le rapport entre la première hauteur he et la deuxième hauteur hs est compris entre 0.5 et 1. Bien entendu, le panneau 28 peut être formé par la plaque 54 et la paroi de support par le renfoncement 53.

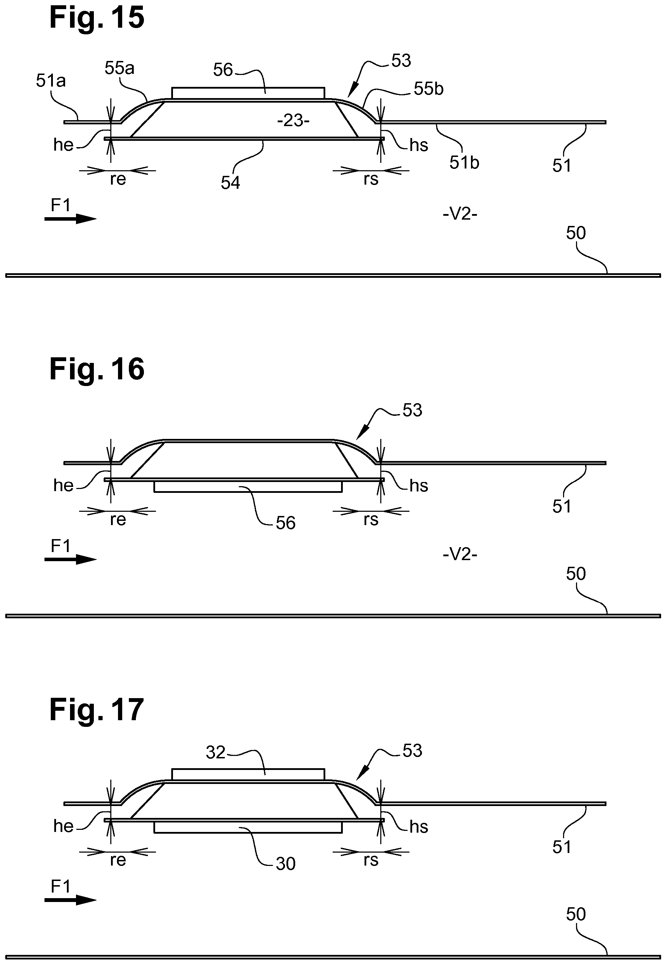

Sur les exemples des figures 14 et 15, un conduit d'huile 56 est agencé dans la paroi enfoncée 53 (ou dans le panneau 28). Une partie du flux d'air F2 qui entre dans la veine secondaire entre dans l'échangeur de chaleur par l'entrée d'air et traverse les ailettes 23 avant de quitter l'échangeur de chaleur par la sortie d'air en étant accéléré. Une autre partie F1 du flux d'air s'écoule à l'extérieur de l'échangeur de chaleur et le long d'une surface externe de la paroi 22, 54. Le flux d'air qui circule à l'extérieur ne rencontre aucun obstacle.

Le mode de réalisation illustré sur la figure 16 diffère des modes de réalisation précédents des figures 14 et 15 en ce que le conduit d'huile 56 est agencé dans la paroi 28, 54 qui s'étend dans la veine secondaire. Le flux d'air circule de part et d'autre du conduit d'huile 56 (c'est-à-dire à l'intérieur de l'échangeur de chaleur et à l'extérieur de l'échangeur de chaleur) ce qui permet d'améliorer l'échange thermique entre l'huile et l'air.

Sur la figure 17, le mode de réalisation représenté diffère des modes de réalisation des figures 12 à 14 en ce qu'un premier conduit 30 d'huile est agencé dans la paroi 22, 54 s'étendant dans la veine secondaire et un deuxième conduit 32 d'huile est agencé dans la portion de la paroi radialement externe qui porte les ailettes. L'huile qui circule dans le premier conduit 30 échange d'un côté avec le flux d'air qui traverse les ailettes 23 et d'une autre côté avec le flux d'air qui by-pass les ailettes 23 (qui circule à l'extérieur de l'échangeur de chaleur et dans la veine secondaire V2).

L'échangeur de chaleur enterré des figures 14 à 17 peut comprendre également un capot 40 avec un profil aérodynamique.

## Revendications

1. Système d'échange de chaleur (20) de turbomachine, comprenant un échangeur de chaleur (21) comportant une paroi de support (22 ; 54; 53) s'étendant sensiblement suivant une direction longitudinale L et une pluralité d'ailettes (23 ; 230 ; 230a ; 230b) s'étendant chacune suivant une direction radiale depuis une surface radialement externe (24) de la paroi de support (22 ; 54 ; 53) et destinées à être balayées par un flux d'air, **caractérisé en ce que** l'échangeur de chaleur (21) comprend une première paroi (25 ; 51a, 55a) profilée disposée en amont des ailettes (23 ; 230 ; 230a ; 230b) et configurée de manière à guider et ralentir le flux d'air entrant dans l'échangeur de chaleur à travers les ailettes et une deuxième paroi (26 ; 51b, 55b) profilée disposée en aval des ailettes et configurées de manière à accélérer le flux d'air sortant de l'échangeur de chaleur, chaque première et deuxième paroi (25, 26 ; 51a, 55a, 51b, 55b) profilée étant fixée à la paroi de support via des éléments de support (27) s'étendant radialement depuis la surface radialement externe (24).

2. Système d'échange de chaleur (20) selon la revendication précédente, **caractérisé en ce que** la première paroi (25 ; 51a, 55a) profilée comprend une première portion de paroi (25a) formant avec la paroi de support (22 ; 54 ; 53) une entrée d'air présentant une première hauteur (he) radiale et la deuxième paroi (26 ; 51b, 55b) profilée comprend une première portion de paroi (26a) formant avec la paroi de support (22 ; 54 ; 53) une sortie d'air présentant une deuxième hauteur (hs) radiale, le rapport entre la première hauteur et la deuxième hauteur étant compris entre 0.5 et 1.

3. Système d'échange de chaleur (20) selon l'une quelconque des revendications précédentes, **caractérisé en ce que** l'échangeur de chaleur comprend un panneau (28 ; 54 ; 53) profilé recouvrant les ailettes (23), le panneau (28 ; 54 ; 53) profilé s'étendant suivant la direction longitudinale entre la première paroi (25 ; 51a, 55a) et la deuxième paroi (26 ; 51b, 55b) auxquelles celui-ci est fixé.

4. Système d'échange de chaleur (20) selon la revendication précédente, **caractérisé en ce qu'**il comprend un circuit de circulation fluidique dans lequel circule un fluide destiné à refroidir et/ou lubrifier des organes et/ou équipement de la turbomachine, le circuit de circulation fluidique comprenant un premier conduit (30) agencé dans la paroi de support (22 ; 54 ; 53) et un deuxième conduit (32) agencé dans le panneau (28 ; 54 ; 53) profilé.

5. Système d'échange de chaleur (20) selon la revendication précédente, **caractérisé en ce que** le circuit de circulation fluidique comprend deux canaux (34a, 34b) reliant les premiers et deuxième conduits (30, 32) entre eux.

6. Système d'échange de chaleur (20) selon l'une quelconque des revendications 3 à 5, **caractérisé en ce que** l'échangeur de chaleur (21) comprend un capot (40) avec un profil aérodynamique agencé radialement à l'extérieur du panneau (28 ; 54 ; 53) profilé et présentant une surface périphérique externe ayant une continuité de surface avec des surfaces radialement externes (42, 43) des première et deuxième parois (25, 26) profilées.

7. Système d'échange de chaleur (20) selon la revendication précédente, **caractérisé en ce que** le capot (40) comprend une première portion (44) de paroi définie dans un plan incliné formant un angle prédéterminé avec un plan dans lequel est définie la surface radialement externe (24) et une deuxième portion (45) de paroi qui est curviligne et disposée en amont de la première portion.

8. Système d'échange de chaleur (20) selon la revendication précédente, **caractérisé en ce que** la deuxième portion de paroi (45) curviligne présente un rayon de courbure qui est fonction de la longueur du panneau profilé suivant la direction longitudinale perpendiculaire à la direction radiale, le rapport entre la longueur du panneau profilé et le rayon de courbure étant compris entre 0,5 et 1,5 mm.

9. Système d'échange de chaleur (20) selon l'une quelconque des revendications précédentes, **caractérisé en ce que** les ailettes (23) sont continues et rectilignes chacune suivant la direction longitudinale, ou discontinues et disposées en quinconces, ou sont ondulées.

10. Système d'échange de chaleur (20) selon l'une quelconque des revendications 6 à 9, **caractérisé en ce qu'**au moins une ailette (23) présente des hauteurs différentes suivant la direction radiale et qui varient de manière à épouser le profil du capot (40).

11. Système d'échange de chaleur (20) selon l'une quelconque des revendications 6 à 10, **caractérisé en ce que** les ailettes (23) comprennent un premier type d'ailettes et un deuxième type d'ailettes agencés sur la surface radialement externe (24) suivant une direction transversale perpendiculaire à la direction radiale, les ailettes du premier type d'ailettes s'étendant radialement chacune entre la paroi de support (22 ; 54 ; 53) et le capot (40), et étant fixées chacune au capot (40) de manière à supporter le capot (40) sur toutes leurs hauteurs radiales.

12. Système d'échange de chaleur (20) selon la revendication précédente, **caractérisé en ce que** les ailettes (23) sont agencées transversalement de manière qu'une ailette sur trois est une ailette du premier type.

13. Système d'échange de chaleur (20) selon l'une quelconque des revendications précédentes, **caractérisé en ce que** l'échangeur de chaleur (21) est réalisé par fabrication additive.

14. Module de turbomachine d'axe longitudinal X comprenant un carter (11) annulaire autour de l'axe longitudinal X dans lequel circule un flux d'air et un système d'échange de chaleur (20) selon l'une quelconque des revendications précédentes qui est agencé dans le carter (11) annulaire, le carter (11) annulaire comportant une paroi (51) annulaire qui guide au moins en partie le flux d'air et qui présente une ouverture ou un renfoncement (53) dans lequel est installé l'échangeur de chaleur (21) avec le panneau (28 ; 54) profilé, la première paroi (25) étant reliée en amont du panneau profilé à une portion de la paroi annulaire et la deuxième paroi (25) étant reliée en aval du panneau (28 ; 54) profilé à un portion de la paroi annulaire.

15. Turbomachine (1) comprenant au moins un système d'échange (20) de chaleur selon l'une quelconque des revendications 1 à 13 et/ou un module de turbomachine selon la revendication précédente.

## Patentansprüche

1. Wärmetauschsystem (20) für eine Turbomaschine, das einen Wärmetauscher (21), der eine Tragwand (22; 54; 53) umfasst, die sich im Wesentlichen entlang einer Längsrichtung L erstreckt, und eine Vielzahl von Rippen (23; 230; 230a; 230b) umfasst, die sich jeweils entlang einer radialen Richtung von einer radial äußeren Fläche (24) der Tragwand (22; 54; 53) erstrecken und dazu bestimmt sind, von einem Luftstrom überstrichen zu werden, **dadurch gekennzeichnet, dass** der Wärmetauscher (21) eine erste Profilwand (25; 51a, 55a), die stromaufwärts der Rippen (23; 230; 230a; 230b) angeordnet und so konfiguriert ist, dass sie den in den Wärmetauscher eintretenden Luftstrom durch die Rippen lenkt und verlangsamt, und eine zweite Profilwand (26; 51b, 55b) umfasst, die stromabwärts der Rippen angeordnet und so konfiguriert ist, dass sie den aus dem Wärmetauscher austretenden Luftstrom beschleunigt, wobei jede erste und zweite Profilwand (25, 26; 51a, 55a, 51b, 55b) über Tragelemente (27), die sich radial von der radial äußeren Fläche (24) erstrecken, an der Tragwand befestigt ist.

2. Wärmetauschsystem (20) nach dem vorstehenden Anspruch, **dadurch gekennzeichnet, dass** die erste Profilwand (25; 51a, 55a) einen ersten Wandabschnitt (25a) umfasst, der mit der Tragwand (22; 54; 53) einen Lufteinlass bildet, der eine erste radiale Höhe (he) aufweist, und die zweite Profilwand (26; 51b, 55b) einen ersten Wandabschnitt (26a) umfasst, der mit der Tragwand (22; 54; 53) einen Luftauslass bildet, der eine zweite radiale Höhe (hs) aufweist, wobei das Verhältnis zwischen der ersten Höhe und der zweiten Höhe zwischen 0,5 und 1 liegt.

3. Wärmetauschsystem (20) nach einem der vorstehenden Ansprüche, **dadurch gekennzeichnet, dass** der Wärmetauscher eine Profilplatte (28; 54; 53) umfasst, die die Rippen (23) bedeckt, wobei sich die Profilplatte (28; 54; 53) entlang der Längsrichtung zwischen der ersten Wand (25; 51a, 55a) und der zweiten Wand (26; 51b, 55b), an denen sie befestigt ist, erstreckt.

4. Wärmetauschsystem (20) nach dem vorstehenden Anspruch, **dadurch gekennzeichnet, dass** es einen Fluidzirkulationskreis umfasst, in dem ein Fluid zirkuliert, das zum Kühlen und/oder Schmieren der Organe und/oder Ausrüstung der Turbomaschine bestimmt ist, wobei der Fluidzirkulationskreis eine erste Leitung (30), die in der Tragwand (22; 54; 53) eingerichtet ist, und eine zweite Leitung (32) umfasst, die in der Profilplatte (28; 54; 53) eingerichtet ist.

5. Wärmetauschsystem (20) nach dem vorstehenden Anspruch, **dadurch gekennzeichnet, dass** der Fluidzirkulationskreis zwei Kanäle (34a, 34b) umfasst, die die erste und die zweite Leitung (30, 32) miteinander verbinden.

6. Wärmetauschsystem (20) nach einem der Ansprüche 3 bis 5, **dadurch gekennzeichnet, dass** der Wärmetauscher (21) eine Haube (40) mit einem aerodynamischen Profil umfasst, die radial außerhalb der Profilplatte (28; 54; 53) eingerichtet ist und eine äußere Umfangsfläche aufweist, die eine Flächenkontinuität mit radial äußeren Flächen (42, 43) der ersten und der zweiten Profilwand (25, 26) aufweist.

7. Wärmetauschsystem (20) nach dem vorstehenden Anspruch, **dadurch gekennzeichnet, dass** die Haube (40) einen ersten Wandabschnitt (44), der in einer geneigten Ebene definiert ist, die einen vorbestimmten Winkel mit einer Ebene bildet, in der die radial äußere Fläche (24) definiert ist, und einen zweiten Wandabschnitt (45) umfasst, der gekrümmt und stromaufwärts des ersten Abschnitts angeordnet ist.

8. Wärmetauschsystem (20) nach dem vorstehenden Anspruch, **dadurch gekennzeichnet, dass** der zweite gekrümmte Wandabschnitt (45) einen Krümmungsradius aufweist, der von der Länge der Profilplatte entlang der Längsrichtung senkrecht zur radialen Richtung abhängt, wobei das Verhältnis zwischen der Länge der Profilplatte und dem Krümmungsradius zwischen 0,5 und 1,5 mm liegt.

9. Wärmetauschsystem (20) nach einem der vorstehenden Ansprüche, **dadurch gekennzeichnet, dass** die Rippen (23) jeweils kontinuierlich und geradlinig entlang der Längsrichtung, oder diskontinuierlich und versetzt angeordnet sind oder gewellt sind.

10. Wärmetauschsystem (20) nach einem der Ansprüche 6 bis 9, **dadurch gekennzeichnet, dass** mindestens eine Rippe (23) entlang der radialen Richtung unterschiedliche Höhen aufweist, die so variieren, dass sie sich dem Profil der Haube (40) anpassen.

11. Wärmetauschsystem (20) nach einem der Ansprüche 6 bis 10, **dadurch gekennzeichnet, dass** die Rippen (23) einen ersten Rippentyp und einen zweiten Rippentyp umfassen, die auf der radial äußeren Fläche (24) entlang einer Querrichtung senkrecht zur radialen Richtung eingerichtet sind, wobei sich die Rippen des ersten Rippentyps jeweils radial zwischen der Tragwand (22; 54; 53) und der Haube (40) erstrecken und jeweils so an der Haube (40) befestigt sind, dass sie die Haube (40) auf allen ihren radialen Höhen tragen.

12. Wärmetauschsystem (20) nach dem vorstehenden Anspruch, **dadurch gekennzeichnet, dass** die Rippen (23) quer so eingerichtet sind, dass jede dritte Rippe eine Rippe des ersten Typs ist.

13. Wärmetauschsystem (20) nach einem der vorstehenden Ansprüche, **dadurch gekennzeichnet, dass** der Wärmetauscher (21) durch additive Fertigung hergestellt ist.

14. Turbomaschinenmodul mit einer Längsachse X, das ein um die Längsachse X ringförmiges Gehäuse (11), in dem ein Luftstrom zirkuliert, und ein Wärmetauschsystem (20) nach einem der vorstehenden Ansprüche umfasst, das in dem ringförmigen Gehäuse (11) eingerichtet ist, wobei das ringförmige Gehäuse (11) eine ringförmige Wand (51) umfasst, die den Luftstrom mindestens zum Teil lenkt und die eine Öffnung oder eine Aussparung (53) aufweist, in der der Wärmetauscher (21) mit der Profilplatte (28; 54) installiert ist, wobei die erste Wand (25) stromaufwärts der Profilplatte mit einem Abschnitt der ringförmigen Wand verbunden ist und die zweite Wand (25) stromabwärts der Profilplatte (28; 54) mit einem Abschnitt der ringförmigen Wand verbunden ist.

15. Turbomaschine (1), die mindestens ein Wärmetauschsystem (20) nach einem der Ansprüche 1 bis 13 und/oder ein Turbomaschinenmodul nach dem vorstehenden Anspruch umfasst.

## Claims

1. A heat exchange system (20) for a turbomachine, comprising a heat exchanger (21) that comprises a support wall (22; 54; 53) that extends substantially along a longitudinal direction L and a plurality of fins (23; 230; 230a; 230b) each extending along a radial direction from a radially outer surface (24) of the support wall (22; 54; 53) and intended to be swept by a flow of air, **characterized in that** the heat exchanger (21) comprises a first profiled wall (25; 51a, 55a) arranged upstream of the fins (23; 230; 230a; 230b) and configured so as to guide and slow down the flow of air entering the heat exchanger through the fins and a second profiled wall (26; 51b, 55b) arranged downstream of the fins and configured to accelerate the flow of air exiting the heat exchanger, each first and second profiled wall (25, 26; 51a, 55a, 51b, 55b) being attached to the support wall via support elements (27) extending radially from the radially outer surface (24).

2. The heat exchange system (20) according to the preceding claim, **characterized in that** the first profiled wall (25; 51a, 55a) comprises a first wall portion (25a) forming, with the support wall (22; 54; 53), an air inlet having a first radial height (he) and the second profiled wall (26; 51b, 55b) comprises a first wall portion (26a) forming, with the support wall (22; 54; 53), an air outlet having a second radial height (hs), the ratio between the first height and the second height being between 0.5 to 1.

3. The heat exchange system (20) according to any one of the preceding claims, **characterized in that** the heat exchanger comprises a profiled panel (28; 54; 53) covering the fins (23), the profiled panel (28; 54; 53) extending along the longitudinal direction between the first wall (25; 51a, 55a) and the second wall (26; 51b, 55b) to which it is attached.

4. The heat exchange system (20) according to the preceding claim, **characterized in that** it comprises a fluidic circulation circuit in which a fluid intended to cool and/or lubricate members and/or equipment of the turbomachine circulates, the fluidic circulation circuit comprising a first duct (30) arranged in the support wall (22; 54; 53) and a second duct (32) arranged in the profiled panel (28; 54; 53).

5. The heat exchange system (20) according to the preceding claim, **characterized in that** the fluidic circulation circuit comprises two channels (34a, 34b) connecting the first and second ducts (30, 32) to each other.

6. The heat exchange system (20) according to any one of claims 3 to 5, **characterized in that** the heat exchanger (21) comprises a cover (40) with an aerodynamic profile arranged radially outwardly of the profiled panel (28; 54; 53) and having an outer peripheral surface having a surface continuity with radially outer surfaces (42, 43) of the first and second profiled walls (25, 26).

7. The heat exchange system (20) according to the preceding claim, **characterized in that** the cover (40) comprises a first wall portion (44) defined in an inclined plane forming a predetermined angle with a plane in which the radially outer surface (24) is defined and a second wall portion (45) which is curvilinear and arranged upstream of the first portion.

8. The heat exchange system (20) according to the preceding claim, **characterized in that** the second curvilinear wall portion (45) has a radius of curvature which is a function of the length of the profiled panel in the longitudinal direction perpendicular to the radial direction, the ratio between the length of the profiled panel and the radius of curvature being between 0.5 and 1.5 mm.

9. The heat exchange system (20) according to any of the preceding claims, **characterized in that** the fins (23) are continuous and straight each along the longitudinal direction, or discontinuous and arranged in staggered pattern, or are corrugated.

10. The heat exchange system (20) according to any one of claims 6 to 9, **characterized in that** at least one fin (23) has different heights along the radial direction and which vary so as to conform the profile of the cover (40).

11. The heat exchange system (20) according to any one of claims 6 to 10, **characterized in that** the fins (23) comprise a first type of fins and a second type of fins arranged on the radially outer surface (24) along a transverse direction perpendicular to the radial direction, the fins of the first type of fins each extending radially between the support wall (22; 54; 53) and the cover (40), and each being attached to the cover (40) so as to bear the cover (40) over their full radial heights.

12. The heat exchange system (20) according to the preceding claim, **characterized in that** the fins (23) are arranged transversely so that every third fin is a fin of the first type.

13. The heat exchange system (20) according to any one of the preceding claims, **characterized in that** the heat exchanger (21) is made by additive manufacturing.

14. A module for a turbomachine with a longitudinal axis X comprising an annular casing (11) around the longitudinal axis X in which an air flow circulates and a heat exchange system (20) according to any one of the preceding claims which is arranged in the annular casing (11), the annular casing (11) comprising an annular wall (51) which guides at least partly the air flow and which has an opening or a recess (53) in which the heat exchanger (21) ) is installed with the profiled panel (28; 54), the first wall (25) being connected upstream of the profiled panel to a portion of the annular wall and the second wall (25) being connected downstream of the profiled panel (28; 54) to a portion of the annular wall.

15. A turbomachine (1) comprising at least one heat exchange system (20) according to any of claims 1 to 13 and/or a turbomachine module according to the preceding claim.
